# DEMANDE DE BREVET EUROPEEN

(11) **EP 2 876 093 A1**
(43) Date de publication de la demande: **27.05.2015**
(21) Numéro de dépôt: 14194316.7
(22) Date de dépôt: 21.11.2014
(51) Int. Cl.: C03C 25/40, C03C 17/30, C03C 25/16, D06M 15/643

(54) **Utilisation d'une composition comportant une émulsion d'un fluide organopolysiloxane et d'un solvant, et textile obtenu au moyen de cette utilisation**

(30) Priorité: 23.11.2013 FR 1361553
(71) Demandeur: Serge Ferrari SAS, 38110 Saint Jean de Soudain (FR)
(72) Inventeur: Merenna, Guilhem, 8006 ZÜRICH (CH); Pouchelon, Alain, 69330 MEYZIEU (FR); Saiz, Carlos, 73190 CHALLES LES EAUX (FR)
(74) Mandataire: Cabinet Laurent & Charras

(57) **Abrégé**

L'invention concerne une utilisation d'une composition comportant une émulsion d'un fluide organopolysiloxane et d'un solvant.

Selon l'invention, une telle utilisation se **caractérise en ce** qu'elle consiste à masquer et rendre sensiblement invisible au moins un pli d'un textile enduit, formé par des fils de verre et recouvert d'une couche d'enduction à base de silicone, au moyen d'un résidu de la composition, ledit résidu comportant un indice de réfraction compris entre 1,45 et 1,60.

## Description

### Domaine technique

La présente invention se rapporte au domaine des textiles enduits, formés de fils de verre et recouvert d'une couche d'enduction à base de silicone. Plus particulièrement la présente invention concerne une composition ayant pour objet le masquage de plis sur ces textiles. Un tel masquage des plis permet alors de rendre sensiblement invisible les plis, mais ne peut en aucun cas en empêcher la formation.

L'invention vise plus particulièrement l'utilisation d'une composition spécifique permettant de réaliser un tel masquage. L'invention concerne également un textile sur lequel est rapportée la composition conformément à l'utilisation objet de l'invention.

### Art antérieur

De façon générale, on connaît des compositions destinées à être pulvérisées sur un textile et permettant de les imperméabiliser, ou encore de les protéger contre d'éventuelles tâches ou marques. En effet, une telle composition est notamment décrite dans le document WO 2005/108 538, dans lequel elle permet de protéger la surface traitée tel qu'un tissu notamment.

Cependant, dans ce cas, la composition à base de silicone est utilisée de façon à imperméabiliser le textile et éviter qu'une tâche vienne endommagée ou décolorée le textile sur lequel elle est rapportée. Un telle composition joue alors uniquement un rôle de barrière et facilite le nettoyage du textile. Une telle utilisation de la composition ne permet en outre pas de masquer d'éventuels plis pour les rendre sensiblement invisibles.

Ainsi, un objectif de l'invention est de permettre un masquage des plis formés à la surface d'une nappe textile formée par des fils de verre. Un tel objectif peut être obtenu en utilisant une composition particulière comportant une émulsion d'un fluide organopolysiloxane et d'un solvant.

### Exposé de l'invention

L'invention concerne donc une utilisation d'une composition comportant une émulsion d'un fluide organopolysiloxane et d'un solvant.

Selon l'invention, cette utilisation se caractérise en ce qu'elle consiste à masquer et rendre sensiblement invisible au moins un pli d'un textile enduit formé par des fils de verre et recouvert d'une couche d'enduction à base de silicone, au moyen d'un résidu de la composition, ce résidu comportant un indice de réfraction compris entre 1,45 et 1,60.

Autrement dit, la composition comportant une émulsion du fluide organopolysiloxane et un solvant, est utilisée de façon à masquer au moins partiellement un pli d'un textile formé par des fils de verre. La composition traverse la couche d'enduction, et se loge par capillarité dans les interstices formés par les filaments de verre brisés lors du pliage. Grâce à l'indice de réfraction avantageusement choisi, une certaine continuité de comportement optique est obtenue, ce qui permet de réduire l'impact visuel de la pliure après application de la composition.

Un tel masquage du pli est réalisé au moyen d'un résidu de la composition dont l'indice de réfraction est compris entre 1,45 et 1,60, avantageusement entre 1,48 et 1,58. En effet, un tel indice de réfraction est généralement celui du verre utilisé pour former les fils de verre.

Un mode de réalisation consiste à pulvériser ladite composition directement sur le textile enduit de silicone, tissé ou tricoté. De cette manière, l'utilisation de la composition permet de masquer des plis formés sur un textile de verre enduit d'une couche à base de silicone. Une telle pulvérisation peut être notamment réalisée au moyen d'une bombe aérosol.

Avantageusement, le fluide organopolysiloxane peut comporter une viscosité comprise entre 20 mPa.s et 10 000 mPa.s (milliPascal secondes). Une telle viscosité de la composition permet alors de faciliter son application ou son imprégnation par les fils de verre.

Selon un mode de réalisation particulier, le fluide organopolysiloxane peut être choisi parmi le groupe comprenant les polymères de silicone avec une formule générale :

(R1ₓR2_{y}SiO _{((4-(x+y))/2)})n

dans laquelle :
- x et y sont des nombres entiers tels que (x+y) est compris entre 1 et 3 ;
- n est un nombre entier supérieur ou égal à 5 ;
- R1 et R2 sont des radicaux choisis parmi le groupe comportant les composés alkyl, alkylène, allyl, aryl, benzyl, phenyl, amine, amide, vynil, fluoroalkyl, perfluoroalkane, les radicaux carboxyester et alkyl-quaternaire d'ammonium et des mélanges de ces composés.

Selon un mode de réalisation particulier, le fluide organopolysiloxane peut être choisi parmi le groupe comprenant les polydimethylsiloxanes, les polydiethylsiloxanes, les polymethylphenylsiloxanes, les polyalkylarylsiloxanes, les polyethyleneoxydialkylsiloxanes, les polypropyleneoxydialkylsiloxanes, les polydialkylcyclosiloxanes et les mélanges de ceux-ci.

Selon un mode de réalisation particulier, le fluide organopolysiloxane peut être présent dans la composition selon une part en masse, comprise entre 1 % et 20 % de celle de la composition.

Avantageusement, le solvant peut être choisi parmi le groupe comportant les alcanes, les cycloalcanes et les alcools tels que l'isopropanol notamment.

En pratique, le solvant peut être présent dans la composition selon une part en masse supérieure à 75 % de celle de la composition.

Comme déjà évoqué, l'invention concerne également un textile enduit caractérisé en ce qu'il comporte un résidu d'une composition utilisée selon l'une des utilisations précédemment décrites.

Un tel textile peut alors être de type tissé ou tricoté. Le résidu de la composition peut quant à lui être rapporté de façon uniforme sur la surface du textile de façon à masquer d'éventuels plis ultérieurs. Dans ce cas de figure, l'utilisation de la composition peut donc être réalisée préalablement à la formation des plis.

Il ressort de ce qui précède qu'une utilisation et un textile conforme à l'invention présente de nombreux avantages et notamment :
- ils permettent de garantir l'homogénéité visuelle d'un textile quelle que soit sa fonction et par conséquent même si celui-ci est destiné à être froissée notamment ;
- ils permettent également de réaliser une réparation visuelle localisée au niveau d'un pli à la surface d'un textile préalablement non traité avec la composition.

## Revendications

1. Utilisation d'une composition comportant une émulsion d'un fluide organopolysiloxane et d'un solvant **caractérisée en ce qu'**elle consiste à masquer et rendre sensiblement invisible au moins un pli d'un textile enduit, formé par des fils de verre et recouvert d'une couche d'enduction à base de silicone, au moyen d'un résidu de la composition, ledit résidu comportant un indice de réfraction compris entre 1,45 et 1,60.

2. Utilisation selon la revendication 1, **caractérisée en ce que** l'indice de réfraction dudit résidu est compris entre 1,48 et 1,58.

3. Utilisation selon la revendication 1, **caractérisée en ce que** la composition est pulvérisée sur ledit textile.

4. Utilisation selon la revendication 1, **caractérisée en ce que** ledit fluide organopolysiloxane présente une viscosité comprise entre 20 mPa.s et 10000 mPa.s.

5. Utilisation selon la revendication 1, **caractérisée en ce que** ledit fluide organopolysiloxane est choisi parmi le groupe comprenant les polymères de silicone avec une formule générale :
(R1ₓR2_{y}SiO _{((4-(x+y))/2)})n ;
dans laquelle :
- x et y sont des nombres entiers tels que (x+y) est compris entre 1 et 3 ;
- n est un nombre entier supérieur ou égal à 5 ;
- R1 et R2 sont des radicaux choisis parmi le groupe comportant les composés alkyl, alkylène, allyl, aryl, benzyl, phenyl, amine, amide, vynil, fluoroalkyl, perfluoroalkane, les radicaux carboxyester et alkyl-quaternaire d'ammonium et des mélanges de ces composés.

6. Utilisation selon la revendication 5, **caractérisée en ce que** ledit fluide organopolysiloxane est choisi parmi le groupe comprenant les polydimethylsiloxanes, les polydiethylsiloxanes, les polymethylphenylsiloxanes, les polyalkylarylsiloxanes, les polyethyleneoxydialkylsiloxanes, les polypropyleneoxydialkylsiloxanes, les polydialkylcyclosiloxanes et les mélanges de ceux-ci.

7. Utilisation selon la revendication 1, **caractérisée en ce que** ledit fluide organopolysiloxane est présent dans la composition selon une part en masse comprise entre 1% et 20% de celle de ladite composition.

8. Utilisation selon la revendication 1, **caractérisée en ce que** le solvant est choisi parmi le groupe comportant les alcanes, les cycloalcanes et les alcools tels que l'isopropanol.

9. Utilisation selon la revendication 1, **caractérisée en ce que** le solvant est présent dans la composition selon une part en masse supérieure à 75% de celle de ladite composition.

10. Textile **caractérisé en ce qu'**il comporte un résidu d'une composition utilisée selon l'une des revendications précédentes.
